(19) **Europäisches Patentamt**

**European Patent Office**

**Office européen des brevets**

(11) **EP 1 235 169 A1**

(12) **EUROPEAN PATENT APPLICATION**

(43) Date of publication:
28.08.2002 Bulletin 2002/35

(51) Int Cl.⁷: **G06F 17/60**

(21) Application number: **01301546.6**

(22) Date of filing: **21.02.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **BRITISH TELECOMMUNICATIONS public limited company**<br>**London EC1A 7AJ (GB)** | (72) Inventor: **The designation of the inventor has not yet been filed**<br><br>(74) Representative: **Nash, Roger William et al**<br>**BT Group Legal Services,**<br>**Intellectual Property Department,**<br>**Holborn Centre, 8th Floor,**<br>**120 Holborn**<br>**London EC1N 2TE (GB)** |

(54) **Supply of personalised information**

(57) An apparatus and method are provided for generating personalised information for users of an information or similar system. In particular, an apparatus is provided with access to one or more suppliers of information, the apparatus including a facility for allocating a common reference for a particular user for use in communications between the apparatus and a particular information supplier. The apparatus is also provided with means for recognising an opportunity to supply person-alised information to a particular user and for inviting a selected information supplier to supply personalised information for presentation to that user, identifying the user with the respectively allocated common reference. The common reference enables a particular user to be consistently identified so that user profile information held independently by two or more entities may contribute to the selection and generation of personalised information for that user or group of users.

FIGURE 3

EP 1 235 169 A1

## Description

The present invention relates generally to the supply of personalised information, and more specifically to an apparatus and method for enabling user profile information held separately by different entities to be used in the selection and presentation of personalised information to users over a communications network.

<u>Background to the invention</u>

The Internet provides a means for access by its users to a huge variety of information sources and online suppliers of goods and services. In addition, information sources and suppliers have an opportunity to monitor the activity of users accessing them, and to use information so gathered to tailor their services to users' observed preferences.

The Internet is an example of a globally accessible distributed file storage and retrieval system, being a multimedia computer communications network built on world-wide telephone and data networks. Over 100,000 servers of various types are presently connected to the Internet providing a publicly accessible distributed data store. Data may be stored on a server in a form accessible using a standard Internet communication protocol called the "HyperText Transfer Protocol" (HTTP). A server storing and making data available in this form is known as an "HTTP server" or a "web server". Data files stored on web servers and accessible by means of HTTP are known as "web pages" which together form the "World Wide Web", or simply the "WEB". Web pages are written using a special WEB language called HyperText Markup Language (HTML) that includes a facility to create links to other pages on the WEB, as appropriate, and enables a user to navigate through information on the WEB by means of such links. Information held on the WEB is accessible to anyone having a computer connected to the Internet and with an interest in accessing it.

An HTTP Uniform Resource Locator (URL) has been adopted as a WEB standard to provide a consistent international naming convention to uniquely identify the location of any WEB resource, including for instance documents, programs, sound and video clips. The HTTP enables URL-identified files (web pages) to be located and transferred for reproduction at user equipment connected to the Internet. Underlying transport protocols, primarily TCP/IP, enable connections to be established, between an Internet user and a WEB server for example, for the intercommunication of data.

Internet users may access information on the WEB using proprietary WEB browser products running on personal computers (PCs) or workstations linked to the Internet. WEB browsers communicate with WEB resources using standard Internet protocols such as HTTP to download selected web pages. WEB browsers interpret HTML commands that were embedded in web pages at the time of markup by web page authors and, if appropriate, display those pages graphically.

In a typical arrangement, access to the Internet and hence to the world-wide web (the "web") is provided through an Internet Service Provider (ISP). A user having a personal computer or other suitable terminal equipment linked to a suitable communications network and running or having access to Internet browser software may subscribe to the chosen ISP's service and thereby gain access to the ISP's servers and gateway to the Internet. The ISP may provide some additional software for installation on a PC or local client equipment, customised to communicate with that particular ISP's equipment and to provide an enhanced user interface.

It is also now possible, through a number of ISPs, to gain access to the Internet from a suitably equipped mobile telephone handset.

It is known in particular for commercially oriented organisations to gather and to hold information about people or other organisations with whom they transact business. Such information may take the form of personal profiles or profiles relating to groups of people, users and customers having particular characteristics or preferences in common. There are clear advantages in being able to adapt an interface to take account of the preferences of the individual or group of individuals with whom one is dealing. This is particularly the case when supplying information such as advertising material.

In the context of an online medium such as the Internet, there are many distinct entities in a position to capture information about particular users' preferences and habits from the contact they have with those users. This is particularly the case with Internet Service Providers (ISPs), search engines and other web portals frequently accessed by known users. Such entities are in a position to monitor the types of information regularly accessed by those users, the times of day and the duration of typical online sessions, for example. Information so gathered can then be used in future to tailor the user interface provided whenever those users access web pages belonging to those entities. For example, potentially interesting advertising material may be targeted at particular users or groups of users. Advertisers will pay a premium to ensure that their advertising material is exposed to a particular preferred audience.

However, entities operating in a competitive environment are reluctant to share or otherwise disclose information they have gathered about particular users. Indeed it may be against the user's wishes for information to be disclosed to other parties, for example by the user's ISP. Even though there may be two or more entities cooperating to provide an online service to a user, it is difficult for them to make use of profile information held separately in order to maximise the usefulness and relevance of the overall service provided to the user. For example, a retailer holding advertising material for presentation to users may rely upon a third party such as a user's ISP to expose that advertising material to those users, but the retailer will be aware that competing retailers also use the ISP for advertising. The ISP itself may be interested in the information that each of the retailers hold about the ISP's subscribing users to ensure that its web pages always contain information of particular relevance to its users. The different and often competing interests therefore limit the opportunities for exploiting user profiles across two or more entities for the overall benefit of a respective user.

Summary of the invention

According to a first aspect of the present invention there is provided a method of accessing personalised information for presentation to a user of an information system, comprising the steps of:

(i) identifying at least one supplier of personalised information;
(ii) allocating a unique identifier for use with said at least one supplier of personalised information in identifying said user;
(iii) sending a message to said at least one supplier of personalised information inviting the supply of personalised information in respect of said user, identifying said user in the message using said unique identifier; and
(iv) receiving, from said at least one supplier of personalised information, at least a pointer to personalised information for presentation to said user.

According to this first aspect of the present invention, a process is provided that may be implemented on a server of a communications service provider such as an ISP, in communication with one or more third party entities such a retailers or other suppliers of information, to enable particular users or groups of users to be consistently identified so that any user profiles stored by the communications service provider and by third party suppliers may be used in a way that makes effective overall use of such profile information for selecting suppliers and for generating personalised information for presentation to those users. In particular, neither the service provider nor a third party information supplier needs to have any knowledge of the contents of each other's user profiles. The method enables an information supplier to generate information that the user is likely to find relevant and of interest, but without disclosing details to another party to the process of their own profile data about that user.

Preferably, novel and inventive aspects of the present invention are associated with a user's communications service provider as that party is generally best placed to obtain and to communicate personalised information to the user, being the intermediary in most of the online communications activity initiated by the user.

According to a second aspect of the present invention, there is provided a method of generating personalised information for presentation to a user of an information system, comprising the steps of:

(i) storing, with a first server of said system, a user profile in respect of said user;
(ii) storing, with a second server of said system, a further user profile in respect of said user;
(iii) allocating a unique identifier for use in identifying said user in communications between said first and second servers;
(iv) identifying an opportunity, by said first server, according to said user profile, to supply personalised information to said user;
(v) generating, at said first server, a message for sending to said second server inviting the supply of personalised information to said user, identifying said user using said unique identifier;
(vi) generating, at said second server, in response to said message, according to said further user profile, at least a pointer to personalised information for presentation to said user.

The method according to this second aspect, may be implemented within an information system to enable generation of personalised information involving two or more servers and making use of user profile information held separately by those servers, without need for details of respectively held user profiles to be exchanged between those servers.

According to a third aspect of the present invention, there is provided an apparatus for accessing personalised information for presentation to users of said apparatus, comprising:

an interface for accessing at least one supplier of personalised information;
means for allocating a unique identifier for a user in respect of a supplier of personalised information; and
means for requesting, from a supplier of personalised information, at least a pointer to personalised information for presentation to a user, identifying said user in said request using a respective allocated unique identifier for said user.

Embodiments of the invention will now be described in more detail, by way of example only, and with reference to the accompanying drawings of which:

Figure 1 is a diagram representing a typical known arrangement for accessing the Internet by means of an Internet Service Provider (ISP) server;
Figure 2 is a diagram illustrating the known use of aliases by users when communicating with online or offline entities;
Figure 3 is a diagram showing an ISP server modified to include features according to preferred embodiments of the present invention;

Figure 4 is a flow diagram showing steps in a preferred process for establishing a common identifier for a user;

Figure 5 is a flow diagram showing steps in a preferred process for establishing a common identifier for a user as part of an offline process for supplying an offer to (e.g. mobile phone) users of an ISP;

Figure 6 is a flow diagram showing steps in operation of a preferred process for supplying personalised information to a (e.g. mobile phone) user of an ISP; and

Figure 7 is a flow diagram showing steps in operation of a preferred process for supplying personalised information to a user of an ISP where two cooperating entities, other that the ISP, are involved in the supply of that information.

Overview of the invention

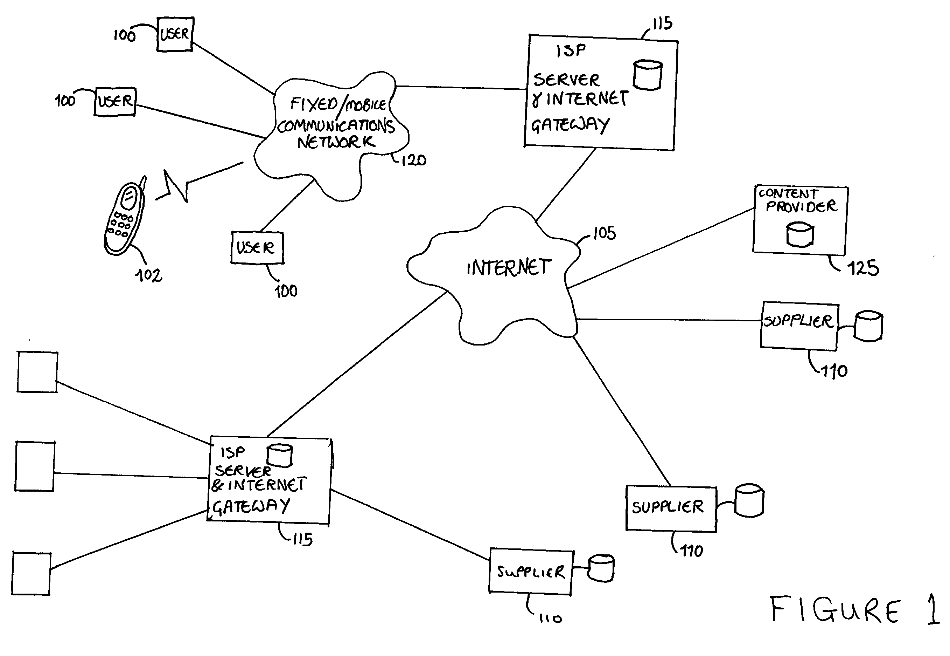

An overview of preferred embodiments of the present invention will now described with reference to Figures 1 to 3. In this overview the present invention will be described in the context of an Internet-based service, basic access to the Internet being provided to users through the services of an Internet Service Provider (ISP) such as that of the present applicant whose internet service trades under the name of "BT Internet".

Referring firstly to Figure 1, a diagram is provided showing a representation of a typical known arrangement by which users may gain access to the Internet 105 from terminal equipment 100 and hence to information hosted on web servers 110 belonging to various types of information supplier. Users (100), particularly individual users and small business users, typically gain access to the Internet 105 by subscribing to an Internet access service provided by an Internet Service Provider (ISP) (115). ISPs (115) may provide software for installation on a subscribing user's personal computer (PC) 100 or on a local client computer to which users have access from basic terminal equipment 100, to access the ISP's server 115 and internet gateway. User equipment 100 may communicate with a chosen ISP's server 115 by means of a communications network 120. The communications network 120 may support a range of possible communications options, from a simple dial-up method of connection to use of an "always-on" connection such as an ISDN connection, or Digital Subscriber Line (DSL) technology.

There are now ISPs offering Internet access to mobile telephone users, the user's terminal equipment in that case comprising a suitably equipped mobile telephone handset 102, or a mobile interface to a lap-top personal computer. Internet access is now becoming available from mobile telephone handsets arranged to operate with a General Packet Radio Service (GPRS) enabled network or with a so called "third generation" network, with the mobile handset running a particular type of browser software providing a Wireless Application Protocol (WAP) interface.

As mentioned in the introduction above, the user's ISP together with other information suppliers 110 may monitor a user's online browsing activity and build up a profile recording the types of information that the user most frequently accesses, together with other information derived about the user that may enable the ISP or an information supplier 110 to improve their service to that user. Such profile information may, for example, be used to ensure that a greater proportion of potentially relevant and personalised information is presented to the user whenever the user accesses the ISP's server or an information supplier's web site. In general, each online entity, be it the ISP or a particular information supplier 110, identifies the user by a different identifier, be it an IP address for the user's terminal equipment 100, or an identifier the user supplied on registering with an information supplier 110.

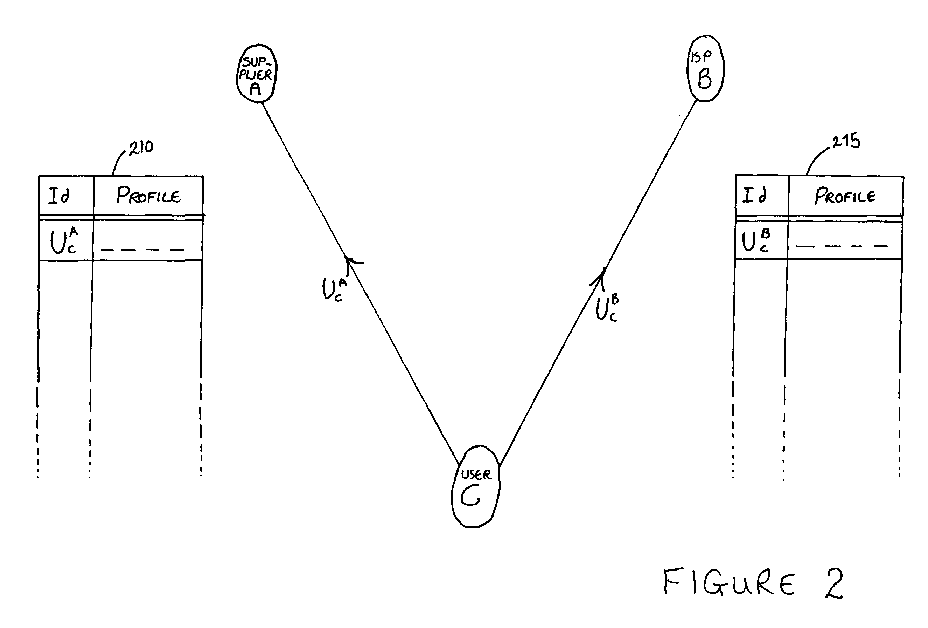

Referring to Figure 2, a diagram is provided to illustrate the point that a particular User C typically communicates with different entities, for example with a supplier A and an ISP B, using different respective identifiers $U^A_C$ and $U^B_C$. Supplier A may generate a table of user profile information 210 indexed using whatever identifier it is able to recognise particular users by, for example identifier $U^A_C$ in respect of User C. Similarly, the ISP B may generate a table of user profile information 215 indexed using the identifiers by which it recognises its subscribing users. In the case of the ISP, the identifier $U^B_C$ for User C may be an identifier provided by User C on first subscribing to the internet access service provided by the ISP B, or an IP address, telephone number, etc.

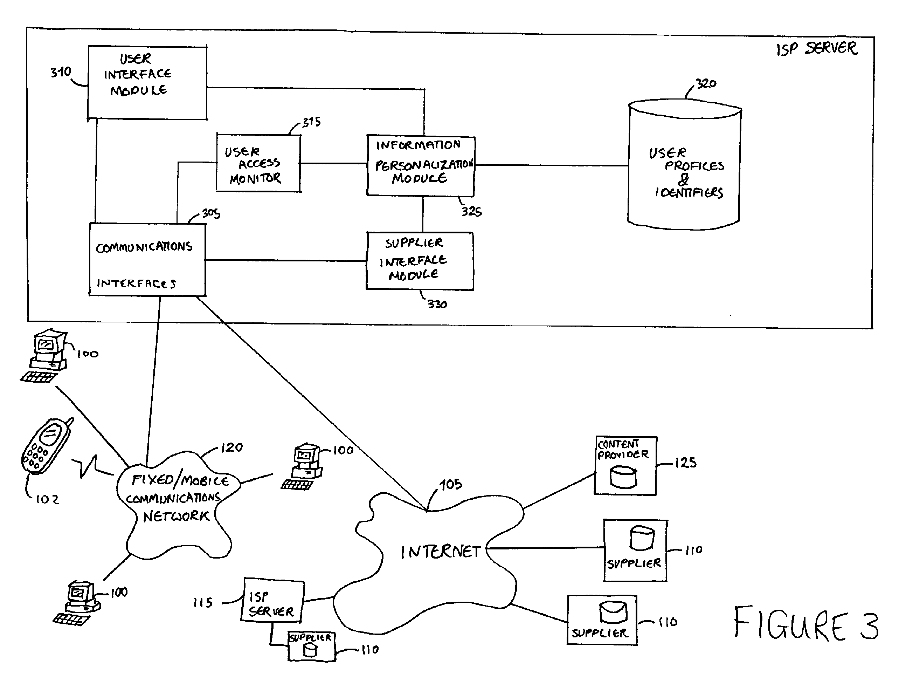

Referring to Figure 3, a diagram is provided showing, in particular, a representation of the functional features of an ISP server 300 arranged according to preferred embodiments of the present invention to supply personalised information to users (100) of the ISP. The ISP server 300 includes some conventional features such as a communications interface 305 to link the ISP server 300 to both a communications network 120 for connection to users (100) and to provide a gateway to the Internet 105, and a user interface module 310 to provide at least an ISP-specific "home" page giving users (100) easy access to various online information and services to which the ISP has arranged access. In addition, the ISP server 300 is provided with a user access monitor 315 for use in gathering information on user access to the ISP's own pages and to the Internet 105, not only for compiling user profiles for storage in a user profile store 320, but also, in preferred embodiments of the present invention, for identifying opportunities for supplying personalised information (325) to users (100). Access to potential suppliers 110 of personalised information is provided by means of a supplier interface module 330.

Supply of personalised information to users (100) is controlled by an information personalisation module 325, arranged with access to the users (100) via the user interface module 310 and to suppliers via the supplier interface module 330. In particular, the information personalisation module 325 may use output from the user access monitor 315 together with respective user profile information from the user profile store 320 to identify opportunities during a user's internet browsing activity, or at other times, to supply personalised information to that user. Information personalisation module 325 may also respond to requests by suppliers 110, or other external sources such as content providers, to obtain personalised information in respect of a specified user (100) and to make it available to that user (100).

Information personalisation module 325 is further arranged to generate and store, in the user profile and identifiers store 320, unique identifiers for particular users (100) for use in respect of a potentially relevant information supplier 110. Such identifiers (320) enable users to be consistently identified by suppliers 110 when communicating with the ISP without either entity disclosing identifiers used in their own direct communications with those users that might compromise a user's anonymity or enable other suppliers to contact those users directly with unsolicited messages. In particular, as will be clear from the description of preferred embodiments below, such ISP-generated user identifiers enable user profile information held by several cooperating entities to contribute to the overall selection and supply of personalised information and services to users. Having the capability to consistently identify users is in turn key to the different entities being able to use their own user profile information on those users to contribute to an improved overall service without needing to disclose the contents of those profiles.

In a preferred embodiment of the present invention, on recognising an opportunity to supply personalised information, for example the detecting, by the user access monitor 315, of an access request message being sent from a user's terminal equipment 100 to the internet 105, information personalisation module 325 selects one or more predetermined information suppliers 110 selected as being of potential interest to the user according to data recorded in that user's profile (320), and sends a message to each selected supplier 110 via the supplier interface module 330 to invite the supply of personalised information to the identified user (100). Any returned information is processed by the information personalisation module 325 and, for example, inserted into or associated with response data returned separately from the Internet 105 in response to the monitored user access request message.

As will be described below, further variations to the above arrangement may be implemented using the functionality of an ISP server 300 according to preferred embodiments of the present invention. For example, the ISP server 300 enables user profiles being held by two third party entities to be used in combination to select information for presentation to a user. For example, a content provider holding a profile for a user may, by means of the functionality implemented on the ISP server 300, request that an advertisement from a selected retailer, also holding a profile for the same user, be provided and inserted into content being posted by the content provider for presentation by the ISP server to that user.

While the following detailed description of preferred embodiments of the present invention will be described in the context of the Internet, it will be clear to the skilled person that the invention may be applied to other online and offline situations where user profiles held by different but cooperating entities may be used in offering an improved overall information-based service to users, but without those entities actually exchanging or otherwise disclosing the contents of their respectively held profiles on those users.

<u>Establishing a common user reference - online embodiment</u>

As discussed in overview above with reference to Figure 3, the information personalisation module 325 is arranged to generate unique identifiers for some or for all users subscribing to the internet service provided from the ISP server 300. Such identifiers may be used as a common identifier for identifying those users to respective information suppliers 110. However, as mentioned above with reference to Figure 2, entities such as the ISP (B) and supplier (A) may already be using a different alias or other identifier to recognise a particular user (C). Therefore, in order for the ISP-generated identifiers to be useful, each entity, including the ISP (B), should establish a cross-reference or mapping between an ISP-generated identifier - a so-called "common reference" to a user - and any aliases by which the respective entity already recognises those particular users. It is possible, of course, that all entities, including the user (C), may adopt the ISP-generated common reference as the single identifier for that user so that mappings between identifiers are not required. While adoption of the ISP-generated common reference may be an option for new entities, e.g. a new information supplier, others would generally prefer to be able to make use of any existing user profiles built up over time, and to facilitate that an entity needs to be able to establish a cross-reference between the ISP-generated common reference for a user and the alias by which the user is already identified to that entity.

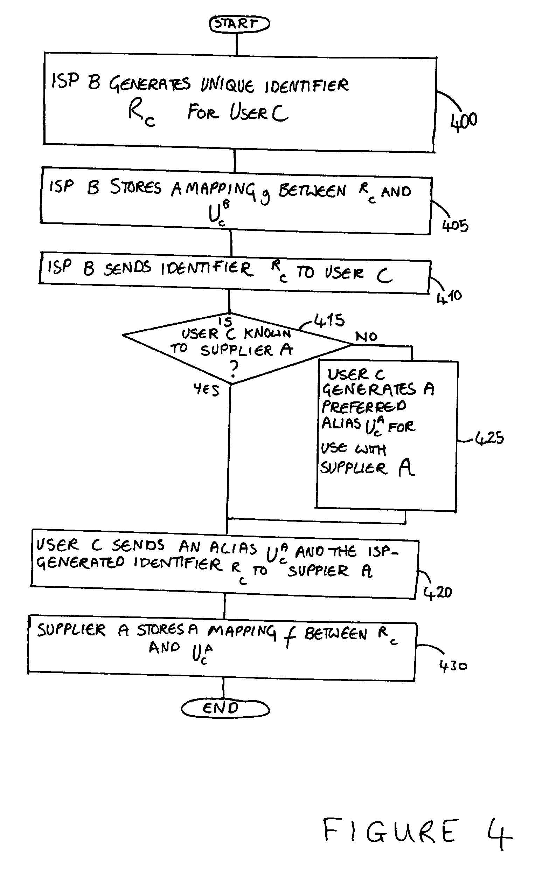

A preferred process for establishing a common reference between an ISP server 300 and a particular information supplier 110 will now be described with reference to Figure 4, using the references of Figure 2.

Referring to Figure 4, processing begins at STEP 400 with the information personalisation module 325 of ISP server 300 (B) generating a unique identifier

$R_C$ - the common reference - for user C in respect of a supplier 110 (A). At STEP 405, module 325, for the ISP B, stores a mapping g between the common reference $R_C$ and the alias $U^B_C$ used by the ISP B to identify the user C such that

$$R_C = g(U^B_C)$$

and hence

$$U^B_C = g^{-1}(R_C)$$

At STEP 410, module 325 of ISP server 300 (B) sends the common reference $R_C$ to the user C. It is not necessary for the user C to be aware of the existence of the reference $R_C$. It may be embedded in a hyperlink contained within an invitation to the user C to confirm (by clicking on the hyperlink) an interest in potentially receiving personalised information from the supplier A. If, at STEP 415, the user C recognises the supplier A as one the user C has already supplied an alias $U^A_C$ to, then at STEP 420 user C sends its alias $U^A_C$ to supplier A together with the ISP-generated common reference $R_C$. However, if at STEP 415 user C has not previously supplied an alias to supplier A, then at STEP 425 user C generates a preferred alias $U^A_C$ for use with that supplier A before processing proceeds to STEP 420. At STEP 430, on receiving the user C's alias $U^A_C$ and the reference $R_C$, supplier A is able to store a mapping f between the alias for user C, already known or newly notified, and the ISP-generated common reference for the user C, $R_C$, such that

$$R_C = f(U^A_C)$$

and hence

$$U^A_C = f^{-1}(R_C)$$

Having established the common reference $R_C$ for the user C in respect of the supplier A, the ISP B is able to use $R_C$ to identify the user C when communicating with the supplier A, for example to invite the supply of personalised information for the user C, without disclosing the alias $U^B_C$ used by the ISP to communicate with the user C directly. Similarly, the ISP B does not need to be aware of the alias $U^A_C$ used by the user C in communications with the supplier A.

Preferably, the above-described process may be initiated by the information personalisation module 325 of the ISP server 300 in respect of each information supplier 110 known to the ISP B, so that the ISP server 300 establishes a list of common references for each user (100) in respect of those suppliers 110.

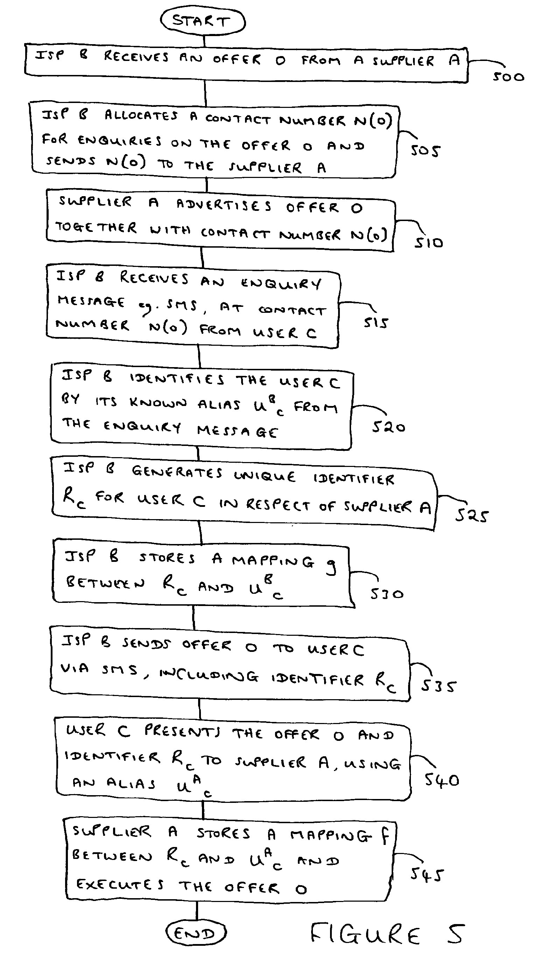

It will be clear that the above process does not need to be executed in isolation. For example, the process of establishing a common reference for a user may be built into a first transaction involving the supply of information from a supplier A via an ISP B serving mobile users, as will be clear from a preferred "offline" embodiment to be described below with reference to Figure 5, again using the references of Figure 2.

Establishing a common reference - offline embodiment

Referring to Figure 5, a flow diagram is provided to show the steps in operation of a preferred process for establishing a common reference for a user C in respect of a supplier A as part of a process for conveying an offer, e.g. an advertisement for a discount in a shop, to subscribing users of a mobile ISP B. In this embodiment of the present invention, user C is a mobile phone user able to communicate with the ISP B using the small messaging service (SMS) for example. As with the process described above with reference to Figure 4, the process steps attributable to the ISP server 300 are preferably executed under the control of the information personalisation module 325 of the preferred ISP server 300.

Processing begins at STEP 500 with receipt, by the ISP B, of an offer O from a supplier A. For example the offer O may be an advertisement for a discount on goods or services where supplier A is a retailer or other service provider, the offer O being directed to subscribing users of the ISP B. The ISP B may have negotiated with the supplier A to make a special offer to its users (C), or the supplier A may have approached the ISP B with an offer O for consideration. At STEP 505, the ISP B assigns at least one contact point N(O) in respect of the offer O and sends N(O) to the supplier A. For example, the contact point N(O) may be a telephone number specifically selected by the ISP B for use with this particular offer, the intention being that a user interested in the offer O would contact the assigned number N(O) to receive details from the ISP B.

At STEP 510, the supplier A, or alternatively the ISP B, advertises the offer O, including in the advertisement the contact point N(O). At STEP 515 a user C, on seeing the advertised offer O, sends an SMS message to the advertised contact number N(O) from their mobile telephone. The SMS message is received by the ISP B. At STEP 520, the ISP B identifies the user C from the received SMS message, for example by means of the user's mobile telephone number embedded within the message, or by means of another predetermined alias $U^B_C$ used by the user C when communicating with the ISP B. At STEP 525 the ISP B generates a unique identifier $R_C$ - a common reference - for use in identifying the user C in respect of the supplier A. At STEP 530 the ISP B stores a mapping g between the common reference $R_C$ and the alias $U^B_C$ (e.g. user C's mobile telephone number) by which the ISP B already identifies us-

er C, such that

$$R_C = g(U_C^B)$$

At STEP 535, the ISP B sends details of the offer O to the user C via SMS, together with the common reference $R_C$. At STEP 540, the user C presents the offer O and the identifier $R_C$ to the supplier A. User C may identify itself to the supplier A using an alias $U_C^A$, for example one used previously in transactions with the supplier A and one by which the supplier A would recognise the user C. At STEP 545, the supplier A is then in a position to store a mapping f between the common reference $R_C$ generated by the ISP B, and the alias $U_C^A$ supplied by the user C, such that

$$R_C = f(U_C^A)$$

Supplier A then executes the offer O in respect of the user C, for example user C makes a purchase from supplier A at a discount price advertised in the offer O.

Having executed the process described above with reference to Figure 5, as for the process of Figure 4, supplier A is thereafter able to recognise the user C from the ISP-generated common reference $R_C$. The reference $R_C$ may be used to facilitate use of profile information held separately by the two cooperating entities, the ISP B and the supplier A in this case, without either entity disclosing the contents of their respectively held profiles on the user C.

As a variation to the process described above with reference to Figure 5, steps 505 to 515, involving assignment and advertising of a contact point N(O) and contacting by the user C of the contact point N(O) to receive details of the offer O, may be replaced with the steps of advertising the offer O by the ISP B (or the supplier A) and supply by the user C, in an SMS message to the ISP B (or to the supplier A), of the user C's mobile telephone or other number to be used subsequently by the ISP B (or by the supplier A), at STEP 535, to send details of the offer O in an SMS message to user C. Such a variation avoids the need to assign offer-specific contact points N(O).

Offline personalised information facility, common reference already established

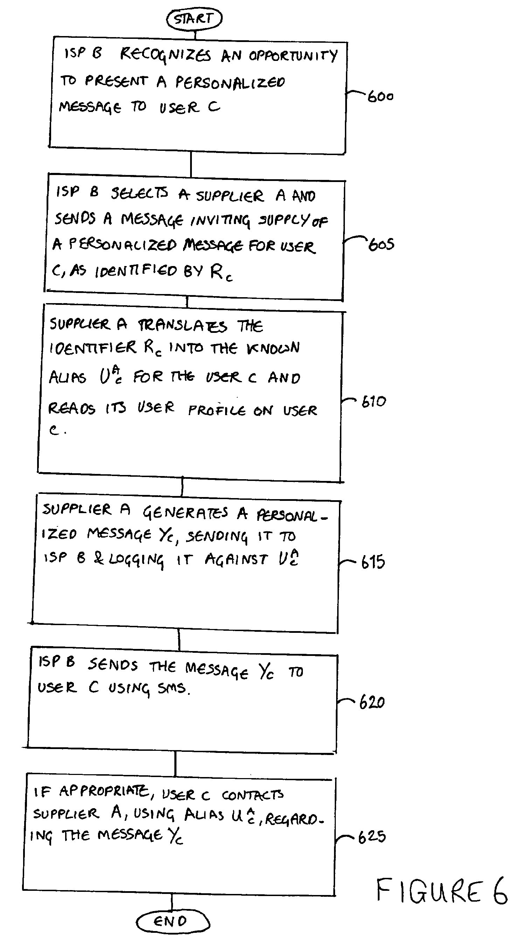

A preferred offline process will now be described with reference to Figure 6 and further, with reference to the apparatus of Figure 3, to illustrate use of an already established common reference $R_C$ for the supply of a personalised message to a user C.

Referring to the flow diagram of Figure 6, the process begins at STEP 600 when the ISP B recognises an opportunity to supply a personalised message to a user C. This recognition step may be implemented in a number of different ways, preferably under the control of the information personalisation module 325 of the preferred ISP server 300 using stored profile information (320) on the user C. For example, the profile for user C may specify that the user C is happy to receive one personalised advertising message per day. Alternatively, the ISP server 300 may simply be monitoring (315) the user C's internet browsing activity and recognise an opportunity to insert some advertising material into web pages being accessed by the user C.

Having recognised such an opportunity, information personalisation module 325, at STEP 605, selects a supplier A from among suppliers known to the ISP B, for which it has already generated a common reference $R_C$ for the user C. The choice of supplier in this selection step is preferably made according to the contents of the user profile held by the ISP on the user C. The ISP B sends a message to the selected supplier A, including the reference Rc to identify the user C, inviting the supplier A to supply personalised information, for example a personalised advertisement or special offer, for the user C. At STEP 610, the selected supplier A uses the earlier stored mapping f to translate the reference $R_C$ into the alias $U_C^A$ by which the supplier recognises the user C and by which the supplier indexes its store of user profiles. At STEP 615 the supplier A generates a personalised message $Y_C$, selected according to the contents of a user profile held by the supplier A on the user C, and sends the message $Y_C$ to the ISP B, logging the message against the alias $U_C^A$.

On receiving the personalised message $Y_C$, the ISP server 300 (B) arranges for the message $Y_C$ to be presented to the user C using one of a number of possible techniques. In the case of a mobile telephone user, the ISP server 300 may send the message $Y_C$ as an SMS message to the user C's mobile telephone. For a user browsing the internet, the message $Y_C$ may be inserted into a web page being accessed by the user C, or made available by means of a hyperlink embedded into such a web page.

At STEP 625, if the personalised message $Y_C$ is for example an offer of a special discount to the user C for purchase of goods from the supplier A, then the user C may contact the supplier A, for example by physically visiting the supplier's shop, identifying him or herself using the alias $U_C^A$ so that the supplier A may recognise the user C as the target of the logged personalised message $Y_C$, from STEP 615, and execute the personalised offer.

Online embodiment, common reference already established

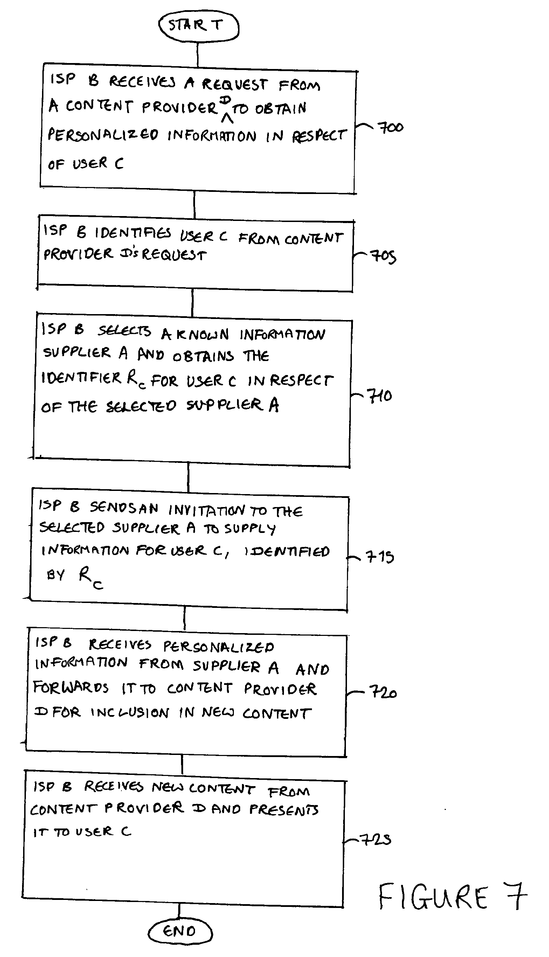

There will now be described, with reference to Figure 7, a process according to a further preferred embodiment of the present invention to enable user profiles held by two entities other than the ISP to be used in combination to provide personalised information for presentation to a user of the ISP, the ISP being the controlling entity in enabling the two other entities to cooperate. The process will be described in the particular context of a content provider D (125) and an information supplier A (110) cooperating to present personalised information to a user C (100), by means of an ISP B (300). However, it will be clear that the process may be applied to any two or more entities linked to a communications service provider of which an ISP is one example. It is assumed once again that a common reference has already been established by the ISP B for a user C with respect to information supplier A.

Referring to Figure 7, the process begins at STEP 700 when ISP B's server 300 receives a request from a content provider D to obtain personalised information for inclusion in content intended for presentation to a user C. The content provider D may identify the user C to the ISP B using whatever identifier was visible to the content provider server 125 when, for example, the user C was browsing web pages, via the ISP B, created and hosted by the content provider D's server 125. In particular, the content provider D may identify the user C from an IP address included in a received HTTP access request message sent from the user C's terminal equipment 100. At STEP 705, the ISP B's server 300 identifies the user C from the identifier supplied by the content provider D, e.g. the user's IP address. The ISP server 300 is able to identify the user C, for example the user C's alias $U^B_C$, from an IP address.

At STEP 710, the ISP B selects a known information supplier A, selected for example on the basis of a user profile (320) held by the ISP B on the user C, or because the information supplier A was specified in the request received from the content provider D at STEP 700, and obtains the preallocated common reference $R_C$ for the user C in respect of that selected information supplier A. At STEP 715, the ISP B sends a message to the selected information supplier A including an invitation to supply personalised information to the user C, identifying the user C in the message by the common reference $R_C$. As in preferred embodiments described above, the information supplier A is then able to use any profile information it has stored for the user C to generate personalised information for that user. The information supplier A firstly translates the previously established common reference $R_C$ into a known alias $U^A_C$ for the user C to obtain any corresponding profile information. On generating the personalised information, supplier A then either sends the personalised information as a whole to the ISP B, or sends a URL for the respective data set to the ISP B.

At STEP 720, the ISP B's server 300 receives some personalised information or a URL for that information for the user C, sent by the information supplier A, and forwards it to the content provider D's server 125 for inclusion in content intended for presentation to user C. At STEP 725, the ISP B's server 300 receives new content from the content provider D's server 125, including the personalised information, or a hyperlink to it, from the information supplier A (110) for presentation to the user C.

It will be readily apparent to a skilled person in this field that the above described embodiments may be altered and combined in a number of ways while remaining within the scope of the present invention. In particular, it will be clear that the roles of the ISP server 300 and an information supplier 110 may be reversed as regards the allocation of a common reference for a user (100) and in other respects as described above with reference to the operation of an information personalisation module 325. Similarly, it will be clear that embodiments of the present invention may be used in many different applications, including electronic trading systems, advertising systems and other applications requiring the generation and supply of personalised information where two or more parties are involved in using user profiles to tailor their services to the interests or requirements of a particular user.

## Claims

1. A method of accessing personalised information for presentation to a user of an information system, comprising the steps of:

   (i) identifying at least one supplier of personalised information;
   (ii) allocating a unique identifier for use with said at least one supplier of personalised information in identifying said user;
   (iii) sending a message to said at least one supplier of personalised information inviting the supply of personalised information in respect of said user, identifying said user in the message using said unique identifier; and
   (iv) receiving, from said at least one supplier of personalised information, at least a pointer to personalised information for presentation to said user.

2. A method according to Claim 1, wherein at step (i), identifying said at least one supplier of personalised information comprises accessing a user profile stored in respect of said user and using information from said user profile to identify a supplier of information relevant to said user.

3. A method according to Claim 1 or Claim 2, including the step of recognising an opportunity to supply personalised information to said user.

4. A method according to Claim 3, wherein said recognising step comprises monitoring requests for access to information by said user, selecting one said request for access and associating, with a response thereto, at least a pointer to personalised information for presentation to said user.

5. A method according to Claim 3, wherein said recognising step comprises accessing a user profile stored in respect of said user and using the information contained therein to identify an opportunity for supplying personalised information to said user.

6. A method of generating personalised information for presentation to a user of an information system, comprising the steps of:

> (i) storing, with a first server of said system, a user profile in respect of said user;
> (ii) storing, with a second server of said system, a further user profile in respect of said user;
> (iii) allocating a unique identifier for use in identifying said user in communications between said first and second servers;
> (iv) identifying an opportunity, by said first server, according to said user profile, to supply personalised information to said user;
> (v) generating, at said first server, a message for sending to said second server inviting the supply of personalised information to said user, identifying said user using said unique identifier;
> (vi) generating, at said second server, in response to said message, according to said further user profile, at least a pointer to personalised information for presentation to said user.

7. An apparatus for accessing personalised information for presentation to users of said apparatus, comprising:

> an interface for accessing at least one supplier of personalised information;
> means for allocating a unique identifier for a user in respect of a supplier of personalised information; and
> means for requesting, from a supplier of personalised information, at least a pointer to personalised information for presentation to a user, identifying said user in said request using a respective allocated unique identifier for said user.

FIGURE 1

FIGURE 2

FIGURE 3

START

ISP B GENERATES UNIQUE IDENTIFIER $R_c$ FOR USER C — 400

ISP B STORES A MAPPING $g$ BETWEEN $R_c$ AND $U_c^B$ — 405

ISP B SENDS IDENTIFIER $R_c$ TO USER C — 410

IS USER C KNOWN TO SUPPLIER A ? — 415

NO

YES

USER C GENERATES A PREFERRED ALIAS $U_c^A$ FOR USE WITH SUPPLIER A — 425

USER C SENDS AN ALIAS $U_c^A$ AND THE ISP-GENERATED IDENTIFIER $R_c$ TO SUPPLIER A — 420

SUPPLIER A STORES A MAPPING $f$ BETWEEN $R_c$ AND $U_c^A$ — 430

END

FIGURE 4

START

ISP B RECEIVES AN OFFER O FROM A SUPPLIER A — 500

ISP B ALLOCATES A CONTACT NUMBER N(o) FOR ENQUIRIES ON THE OFFER O AND SENDS N(o) TO THE SUPPLIER A — 505

SUPPLIER A ADVERTISES OFFER O TOGETHER WITH CONTACT NUMBER N(o) — 510

ISP B RECEIVES AN ENQUIRY MESSAGE eg. SMS, AT CONTACT NUMBER N(o) FROM USER C — 515

ISP B IDENTIFIES THE USER C BY ITS KNOWN ALIAS $u^B_c$ FROM THE ENQUIRY MESSAGE — 520

ISP B GENERATES UNIQUE IDENTIFIER $R_c$ FOR USER C IN RESPECT OF SUPPLIER A — 525

ISP B STORES A MAPPING g BETWEEN $R_c$ AND $u^B_c$ — 530

ISP B SENDS OFFER O TO USER C VIA SMS, INCLUDING IDENTIFIER $R_c$ — 535

USER C PRESENTS THE OFFER O AND IDENTIFIER $R_c$ TO SUPPLIER A, USING AN ALIAS $u^A_c$ — 540

SUPPLIER A STORES A MAPPING f BETWEEN $R_c$ AND $u^A_c$ AND EXECUTES THE OFFER O — 545

END

FIGURE 5

START

ISP B RECOGNIZES AN OPPORTUNITY TO PRESENT A PERSONALIZED MESSAGE TO USER C — 600

ISP B SELECTS A SUPPLIER A AND SENDS A MESSAGE INVITING SUPPLY OF A PERSONALIZED MESSAGE FOR USER C, AS IDENTIFIED BY $R_c$ — 605

SUPPLIER A TRANSLATES THE IDENTIFIER $R_c$ INTO THE KNOWN ALIAS $U_c^A$ FOR THE USER C AND READS ITS USER PROFILE ON USER C. — 610

SUPPLIER A GENERATES A PERSONALIZED MESSAGE $Y_c$, SENDING IT TO ISP B & LOGGING IT AGAINST $U_c^A$ — 615

ISP B SENDS THE MESSAGE $Y_c$ TO USER C USING SMS. — 620

IF APPROPRIATE, USER C CONTACTS SUPPLIER A, USING ALIAS $U_c^A$, REGARDING THE MESSAGE $Y_c$ — 625

END

FIGURE 6

START

ISP B RECEIVES A REQUEST FROM A CONTENT PROVIDER D TO OBTAIN PERSONALIZED INFORMATION IN RESPECT OF USER C — 700

ISP B IDENTIFIES USER C FROM CONTENT PROVIDER D's REQUEST — 705

ISP B SELECTS A KNOWN INFORMATION SUPPLIER A AND OBTAINS THE IDENTIFIER $R_c$ FOR USER C IN RESPECT OF THE SELECTED SUPPLIER A — 710

ISP B SENDS AN INVITATION TO THE SELECTED SUPPLIER A TO SUPPLY INFORMATION FOR USER C, IDENTIFIED BY $R_c$ — 715

ISP B RECEIVES PERSONALIZED INFORMATION FROM SUPPLIER A AND FORWARDS IT TO CONTENT PROVIDER D FOR INCLUSION IN NEW CONTENT — 720

ISP B RECEIVES NEW CONTENT FROM CONTENT PROVIDER D AND PRESENTS IT TO USER C — 725

END

FIGURE 7

16

**European Patent Office**

**DECLARATION**

which under Rule 45 of the European Patent Convention shall be considered, for the purposes of subsequent proceedings, as the European search report

**Application Number**

EP 01 30 1546

| The Search Division considers that the present application, does not comply with the provisions of the EPC to such an extent that it is not possible to carry out a meaningful search into the state of the art on the basis of all claims | **CLASSIFICATION OF THE APPLICATION (Int.Cl.7)** |
|---|---|
| Reason: | G06F17/60 |

The subject-matter claimed in claims 1-6 falls under the provisions of Article 52(2) and (3) EPC, such subject-matter relating to a method of doing business as such.

Claim 7 relates to a conventional apparatus for performing the business method of claims1-6. Although this claim does not literally belong to the method category, it essentially claims protection for the same commercial effect as the method claims. The Search Division considers that searching this subject-matter would serve no useful purpose. It is not at present apparent how the subject-matter of the present claims may be considered defensible in any subsequent examination phase in front of the EPO with regard to the provisions of Articles 54 and 56 EPC (novelty, inventive step); see also Guidelines B-VII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---

| Place of search | Date | Examiner |
|---|---|---|
| THE HAGUE | 14 May 2001 | FERNANDEZ FERRE.., M |

EPO FORM 1504 (P04C37)